# EUROPEAN PATENT APPLICATION

(11) **EP 4 712 566 A1**
(43) Date of publication of application: **18.03.2026**
(21) Application number: 25202275.1
(22) Date of filing: 15.09.2025
(51) Int. Cl.: H04W 36/14, H04W 88/06

(54) **WIRELESS BROADBAND COMMUNICATION INTEGRATION PROCESS FOR BUSINESS IP PHONE SYSTEM**

(30) Priority: 13.09.2024 US 202463732725 P
(71) Applicant: Mitel Networks Corporation, Ottawa, Ontario K2K 3K1 (CA)
(72) Inventor: de Witte, Jeroen, Kanata (CA); Stampfli, Franz, Bolken (CH); Kihyun, Kim, Kanata (CA); Logendra, Naidoo, Ottawa (CA)
(74) Representative: McDougall, James

(57) **Abstract**

Systems and methods for a dual-functional modular system for providing Internet Protocol (IP) phones with wireless broadband capabilities and a handoff from public cellular networks to a private business system. The method may include providing a plurality of IP phones with one or more modular Long-Term Evolution (LTE) upgrade units, wherein the plurality of IP phones gain LTE endpoint features; configuring the one or more units to connect to a private IP network; continuously monitoring signal strength of a public LTE network and the private IP network; detecting a mobile device with an active call; when the private IP network provides a more stable connection, initiating a handoff from the public LTE network to the IP network; transferring the active call data to an available LTE-equipped IP phone; monitoring the IP network; and when the IP network becomes unstable, reverting service of the active call to the public LTE network.

## Description

### TECHNICAL FIELD

The present invention relates generally to wireless broadband communication integration for business Internet Protocol (IP) phone systems and, particularly, the integration of wireless broadband communication connectivity by introducing a dual-functional modular system.

### BACKGROUND

The attraction for business phone providers integrating Long-Term Evolution (LTE) connectivity with existing IP phone systems presents problems. For example, small and medium-sized businesses need seamless mobile connectivity but without the high costs associated with replacing current infrastructure. Many office environments, including older buildings with substantial concrete structures, pose additional challenges for in-building connectivity. There is a need for modularity and a requirement to retrofit legacy wired phones into LTE-capable endpoints. However, expanding a business' territorial reach often deteriorates signal strength and penetration due to physical barriers within buildings.

Known methods typically involve dedicated desk phones that offer LTE connectivity directly from network providers. While these devices enable LTE capabilities, they are limited by requiring businesses to invest in specific new hardware. This approach not only lacks flexibility but also does not address the common connectivity issues faced by many businesses, particularly those in older or extensively segmented buildings.

### SUMMARY

A first aspect of this specification provides a method for providing Internet Protocol (IP) phones with wireless broadband capabilities and a handoff from public cellular networks to a private business system, the method comprising: providing a plurality of IP phones within an environment with one or more modular Long-Term Evolution (LTE) upgrade units; configuring the one or more modular LTE upgrade units to connect to a private IP network associated with the environment; continuously monitoring signal strength and connectivity status of a public LTE network and the private IP network; detecting a device with an active call in the environment; when the private IP network provides a stronger and more stable connection, initiating a handoff of the active call from the public LTE network to the private IP network; transferring data associated with the active call to an available LTE-equipped IP phone or other endpoint within the private IP network, wherein the available LTE-equipped IP phone or other endpoint is selected based on connection quality, availability, or proximity; integrating business-specific features into the active call post-handoff; monitoring a stability of the private IP network and a location of the device relative to a range of the private IP network; and when the private IP network becomes unstable or when the device moves out of the range, reverting service of the active call back to the public LTE network to maintain continuous connectivity.

The one or more modular LTE upgrade units may be installed through add-on devices using a Programmable Key Module (PKM) interface or including a phone stand using connector interfaces or phone handset.

To communicate with the one or more modular LTE upgrade units through wire or wireless, the add-on devices may incorporate CPU, power supply circuit, LTE, integrated antennas, interfaces, and hardware components.

The one or more modular LTE upgrade units may displace the PKM interface or are an alternative phone stand.

The method may further comprise establishing a mesh network among the plurality of IP phones, wherein establishing the mesh network causes the plurality of IP phones to function collectively as a unified carrier system that operates independently of external networks.

The method may further comprise, when the private IP network does not provide a stronger and more stable connection, continuing the active call over the public LTE network without transition.

The method may further comprise implementing a continuous monitoring system to evaluate the signal strength and connectivity quality of the LTE network.

The method may further comprise, when poor signal strength or connectivity issues are detected on the LTE network, automatically switching the active call and data sessions associated with the active call to the private IP network which acts as a backup.

The method may further comprise, when stable signal strength or connectivity is detected on the LTE network, continuing to use the LTE network for the active call.

The method may further comprise, enabling users on the private IP network to access functionalities directly from LTE-equipped desk phones or an LTE phone with an adapted module within the environment, the functionalities including room booking systems and enterprise intranet chat.

The method may further comprise, managing calls within the private IP network using traditional IP telephony features.

The method may further comprise, securing and logging communications according to business standards using capabilities, the capabilities including call transferring, conferencing, and direct station calls.

The plurality of IP phones may gain LTE endpoint features.

A second aspect of this specification provides a dual-functional modular system for providing Internet Protocol (IP) phones with wireless broadband capabilities and a handoff from public cellular networks to a private system, comprising: one or more modular Long-Term Evolution (LTE) upgrade units; a plurality of IP phones within a business environment; a tangible, non-transitory memory configured to communicate with the one or more modular LTE upgrade units and the plurality of IP phones, the tangible, non-transitory memory having instructions stored thereon that, in response to execution by the processor, cause the processor to perform operations comprising: connect the one or more modular LTE upgrade units to a private IP network associated with the business environment; continuously monitor signal strength and connectivity status of a public LTE network and the private IP network; detect a device with an active call in the business environment; when the private IP network provides a stronger and more stable connection, initiate a handoff of the active call from the public LTE network to the private IP network; transfer data associated with the active call to an available LTE-equipped IP phone or other endpoint within the private IP network, wherein the available LTE-equipped IP phone or other endpoint is selected based on connection quality, availability, or proximity; integrate business-specific features into the active call post-handoff; monitor a stability of the private IP network and a location of the device relative to a range of the private IP network; and when the private IP network becomes unstable or when the device moves out of the range, revert service of the active call back to the public LTE network to maintain continuous connectivity.

The one or more modular LTE upgrade units may be installed through add-on devices using a Programmable Key Module (PKM) interface or including a phone stand using connector interfaces or phone handset.

To communicate with the one or more modular LTE upgrade units through wire or wireless, the add-on devices may incorporate CPU, power supply circuit, LTE, integrated antennas, interfaces, and hardware components.

The one or more modular LTE upgrade units may displace the PKM interface or are an alternative phone stand.

The instructions may further cause the processor to: implement a continuous monitoring system to evaluate the signal strength and connectivity quality of the LTE network; and when poor signal strength or connectivity issues are detected on the LTE network, automatically switch the active call and data sessions associated with the active call to the private IP network which acts as a backup.

The instructions may further cause the processor to: enable users on the private IP network to access functionalities directly from LTE-equipped desk phones or an LTE phone with an adapted module within the business environment, the functionalities including room booking systems and enterprise intranet chat.

A third aspect of this specification provides a method for providing Internet Protocol (IP) phones with wireless broadband capabilities and a handoff from public cellular networks to a private system, the method comprising: providing a plurality of IP phones within an environment with one or more modular Long-Term Evolution (LTE) upgrade units; configuring the one or more modular LTE upgrade units to connect to a private IP network associated with the environment; continuously monitoring signal strength and connectivity status of a public LTE network and the private IP network; detecting a device with an active call in the environment; when the private IP network provides a stronger and more stable connection, initiating a handoff from the public LTE network to the private IP network; transferring the active call to an available LTE-equipped IP phone; monitoring a stability of the private IP network; and when the private IP network becomes unstable, reverting service of the active call to the public LTE network to maintain continuous connectivity.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements and wherein:
FIG. 1 is a flowchart of a method for controlling a dual-functional modular system according to aspects of this disclosure; and
FIG. 2 is a flowchart depicting actions of the dual-functional modular system according to aspects of this disclosure.

It will be appreciated that elements in the figures are illustrated for simplicity and clarity and have not necessarily been drawn to scale. For example, the dimensions of some of the elements in the figures may be exaggerated relative to other elements to help to improve understanding of illustrated embodiments of the present invention.

### DETAILED DESCRIPTION

The description of exemplary embodiments of the present invention provided herein is merely exemplary and is intended for purposes of illustration only; the following description is not intended to limit the scope of the invention as claimed. Moreover, recitation of multiple embodiments having stated features is not intended to exclude other embodiments having additional features or other embodiments incorporating different combinations of the stated features.

It must also be noted that, the term "exemplary" is used in the sense of "example," rather than "ideal."

It must also be noted that, as used in the specification and the appended claims, the singular forms "a," "an" and "the" include plural referents unless the context clearly dictates otherwise.

By "comprising" or "containing" or "including" it is meant that at least the named compound, element, particle, or method step is present in the composition or article or method, but does not exclude the presence of other compounds, materials, particles, method steps, even if the other such compounds, material, particles, method steps have the same function as what is named.

Relative terms, such as "about," "substantially," or "approximately" are used to include small variations with specific numerical values (e.g., +/- x%,), as well as including the situation of no variation (+/-0%). In various embodiments, the numerical value x is less than or equal to 10 - e.g., less than or equal to 5, to 2, to 1, or smaller.

As used herein, "database" refers to any suitable database for storing information, electronic files or code to be utilized to practice embodiments of this disclosure. As used herein, "server" refers to any suitable server, computer or computing device for performing functions utilized to practice embodiments of this disclosure.

As used herein, "software" refers to programs or other operating information utilized by a processor or other computing hardware.

As used herein, "meeting" means a meeting or conference such as telephonic, video, audio/video, in-person, a hybrid of any of the preceding, and any type of meeting involving multiple participants.

The present invention revolutionizes the integration of wireless broadband communication, e.g., LTE, 5G, 6G, Wireless Wide Area Network (WWAN), Digital Enhanced Cordless Telecommunications (DECT), etc., connectivity by introducing a dual-functional modular system that not only equips existing IP phones with wireless broadband capabilities but also orchestrates a seamless handoff from public cellular networks to a private business system. This system facilitates several innovative handoff mechanisms which are to be detailed in the method.

The following embodiment is one example of the inventive system and method implemented for LTE communications.
1. Complete Network Transition: Allows a complete transfer of service from the public network to the business's own IP phone network, effectively turning the business environment into a premise-based carrier. This transition may optionally be facilitated by meshing all phones equipped with the LTE module, creating a new carrier network within the business premises.
2. Feature Extensibility: Provides users the ability to hook into their desk phones, which are adapted with the LTE add-on module, extending their usability to include business-specific applications like room booking systems or enterprise intranet chat functionalities.

This modular approach not only preserves existing investments in IP phone systems but also significantly reduces R&D costs and speeds up time to market, unlike solutions that require complete hardware replacements.

The LTE Business Integration and Seamless Handoff System is a modular upgrade designed for existing IP phones, introducing LTE functionality and enabling seamless transition of calls and data from public cellular networks to an internal business phone system. This integration allows the private business IP phone system to take precedence over public carriers, enhancing the functionality of LTE endpoints with features such as conferencing and collaboration, which are native to the business phone system.

The LTE Business Integration and Seamless Handoff System utilizes a modular upgrade approach that integrates LTE functionality into existing IP phones, while also providing the flexibility to transfer service from a public cellular network to a business's private IP phone network. This integration not only transforms business environments into premise-based carriers through a network of LTE-equipped IP phones but also extends advanced business-specific functionalities to traditional LTE endpoints. Optionally, the network may be a mesh network.

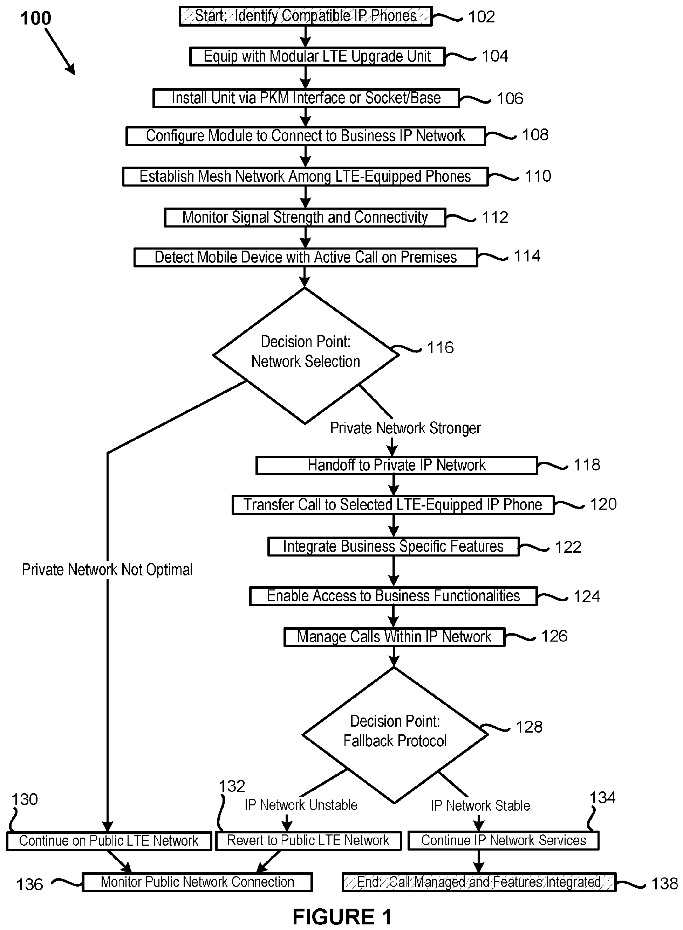

FIG. 1 depicts a method 100 for controlling a dual-functional modular system according to aspects of this disclosure.

The method 100 of the present invention combines traditional and modern business and carrier technologies to provide businesses with a feature-rich communication system that optimizes both connectivity and functionality.

The method 100 may first identify compatible IP phones within the business environment (102). For example, the business environment may be a business headquarters, building, campus, etc. The system can identify IP phones in that environment that may be compatible with a modular LTE upgrade unit.

The method 100 may equip each of the compatible IP phones with a modular LTE upgrade unit (104). The upgrade unit may also include 5G and/or WWAN. Retrofitting existing IP phones with a modular LTE/5G/WWAN unit can integrate power, central processing unit (CPU), chipset, and antenna without replacing the entire handset or requiring a new device.

As a prerequisite step for this process, the unit is installed installed through add-on module(s) such as a Programmable Key Module (PKM) interface or phone stand using connector interfaces or phone handset (or socket/base) (106). To communicate with LTE unit(s) through wire or wireless, the add-on module(s) incorporate CPU, power supply circuit, LTE, integrated antennas, interfaces, and other hardware components. The LTE added-on module(s) displaces the Programmable Key Module (PKM) interface or is an alternative phone stand.

The method 100 may then configure each module to connect to the existing business (e.g., private) IP network (108). In this way, a phone can connect to either a public LTE network or private IP network.

The method 100 may optionally establish a mesh network among all LTE-equipped phones, enabling them to function collectively as a unified carrier system that operates independently of external networks (110). The mesh network can operate as a micro-carrier within enterprise premises. As a result, the system can transform a collection of IP phones into a "carrier core" without special hardware.

The method 100 may continuously monitor the signal strength and connectivity status of both the public LTE network and the private IP network (112). The LTE signal strength may be based on reference signal receiver power (RSRP) from the cell tower, reference signal received quality (RSRQ) from the cell tower, signal to noise ratio (SNR), etc.

When a mobile device with an active call enters the premises (e.g., business environment), the system detects its presence and assesses the connectivity options (114). The connectivity options may include using the public LTE network for the call or using the private IP network for the call.

The method 100 may then perform network selection (116):
(a) If the private IP network provides a stronger and more stable connection, the method 100 may initiate a seamless handoff from the public LTE network to the private IP network (118); or
(b) If the private IP network is not optimal (e.g., weak or unstable connection), the method 100 may continue the call over the public LTE network without transition (130). The system may select a network based on real-time signal strength, quality of service (QoS) metrics, enterprise policy rules, etc.

For calls transitioning to the IP network, the method 100 may seamlessly transfer the active call data to an LTE-equipped IP phone (120). The system may transfer the active call data to a selected LTE-equipped IP phone or other endpoint within the business system. For example, the system may transfer the active call data to an available LTE-equipped IP phone or other endpoint within the business system, where the available LTE-equipped IP phone is selected based on connection quality, availability, or proximity.

This phone then becomes the active endpoint for the call, maintaining continuity without user disruption. Therefore, the system can provide a seamless transition between public LTE/5G carrier networks and private enterprise IP/mesh systems.

The method 100 may integrate business-specific features into the active call session post-handoff (122). Accordingly, the method 100 can enable users on the business IP network to access functionalities and LTE endpoint features such as room booking systems and enterprise intranet chat directly from their LTE-equipped desk phones or any LTE phone with an adapted module within the vicinity (124). Enterprise applications such as room booking, intranet chat, conferencing, Customer Relationship Management (CRM), etc. can be added into standard LTE endpoints once a call is handed off into the private system.

The method 100 may manage all calls within the IP network using traditional IP telephony features (126). For example, the system can leverage capabilities such as call transferring, conferencing, and direct station calls, ensuring that all communications are logged and secured according to business standards.

The system can also monitor the stability of the IP network and the user's location relative to the network range.

The method 100 may reach a decision point for a fallback protocol (128). If the IP network becomes unstable or if a user moves out of the network range, the method 100 may revert the service back to the public LTE network to ensure continuous connectivity (132). Otherwise, if the IP network is stable, it may continue IP network services (134). In this case, the method 100 may end as the call is managed and features are integrated (138).

The method 100 may implement a continuous monitoring system to evaluate the signal strength and connectivity quality of the LTE network within the premise (136); and

If poor signal strength or connectivity issues are detected on the LTE network, the system can automatically switch the call and data sessions to the IP phone network which acts as a backup. This ensures that communication remains stable and continuous, providing reliability even in areas of the premises where LTE connectivity is compromised.

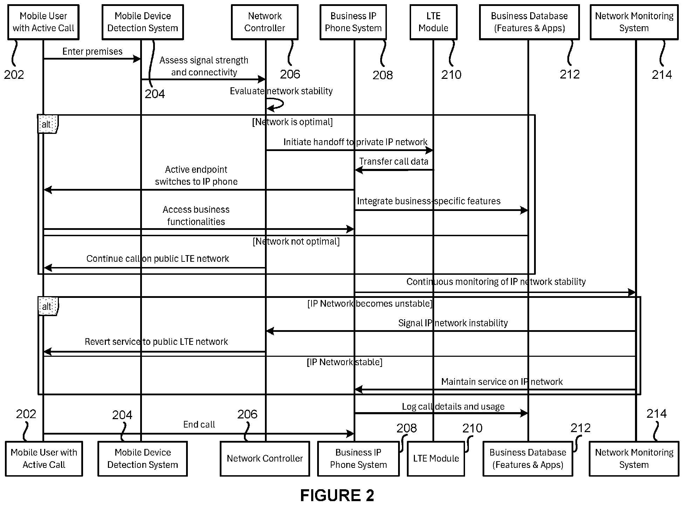

FIG. 2 is a flowchart depicting actions of the dual-functional modular system according to aspects of this disclosure.

A mobile user with an active call 202 on the business network may enter the premises (e.g., business environment). A mobile device detection system 204 can assess signal strength and connectivity of the active call.

A network controller 206 can evaluate network stability of a private network. If the private network is optimal (e.g., strong signal strength and connectivity), the network controller 206 can initiate a handoff of the active call to the private IP network via an LTE module 210. The LTE module 210 can transfer the call data to a business IP phone system 208.

The business IP phone system 208 can switch an active endpoint to the IP phone and integrate business specific features. The business specific features may be stored in a business database 212, which may include features and applications.

Therefore, the mobile user with the active call 202 can access business functionalities via the business IP phone system 208.

If the private network is not optimal (e.g., weak signal strength and connectivity), the network controller 206 can continue the call on the public LTE network.

The business IP phone system 208 can continuously monitor the IP network for stability using a network monitoring system 214. If the IP network becomes unstable, the network monitoring system 214 can signal IP network instability to the network controller 206. The network controller 206 can then revert service of the mobile user with active call 202 to the public LTE network.

Otherwise, if the IP network is stable, the network monitoring system 214 can maintain service on the IP network via the business IP phone system 208. The business IP phone system 208 can log call details and usage, which can be stored in the business database 212.

When complete, the mobile user 202 may end the call.

Implementing a system that integrates wireless broadband functionalities into business IP phone systems and enables handoffs from public cellular networks to private networks may require navigation of federal, state, and local regulations. For example, compliance with telecommunications standards set by the Canadian Radio-Television and Telecommunications Commission (CRTC) and the Federal Communications Commission (FCC), privacy laws, and ensuring that all data transitions during and after handoff are secure. The business-network provider may need to provide essential assurances to adhere to service quality benchmarks set forth in existing carrier agreements, which dictate specific performance metrics such as call quality, latency, and throughput.

Regular audits and updates to the system may be needed to maintain legal compliance, and any issues that arise must be thoroughly documented and reported to relevant stakeholders. Additionally, continuous refinement of the handoff protocol is necessary to align with evolving regulatory frameworks and technological advancements, ensuring the system remains effective and compliant.

For simplicity and clarity of illustration, the drawing figures illustrate the general manner of construction, and descriptions and details of some features and techniques may be omitted to avoid unnecessarily obscuring the present disclosure. Additionally, elements in the drawing figures are not necessarily drawn to scale. For example, the dimensions of some of the elements in the figures may be exaggerated relative to other elements to help improve understanding of embodiments of the present disclosure. The same reference numerals in different figures denote the same elements.

The terms "first," "second," "third," "fourth," and the like in the description and in the claims, if any, are used for distinguishing between similar elements and not necessarily for describing a particular sequential or chronological order. It is to be understood that the terms so used are interchangeable under appropriate circumstances such that the embodiments described herein are, for example, capable of operation in sequences other than those illustrated or otherwise described herein. Furthermore, the terms "include," and "have," and any variations thereof, are intended to cover a non-exclusive inclusion, such that a process, method, system, article, device, or apparatus that comprises a list of elements is not necessarily limited to those elements but may include other elements not expressly listed or inherent to such process, method, system, article, device, or apparatus.

The terms "left," "right," "front," "back," "top," "bottom," "over," "under," and the like in the description and in the claims, if any, are used for descriptive purposes and not necessarily for describing permanent relative positions. It is to be understood that the terms so used are interchangeable under appropriate circumstances such that the embodiments of the apparatus, methods, and/or articles of manufacture described herein are, for example, capable of operation in other orientations than those illustrated or otherwise described herein.

The terms "couple," "coupled," "couples," "coupling," and the like should be broadly understood and refer to connecting two or more elements mechanically and/or otherwise. Two or more electrical elements may be electrically coupled together, but not be mechanically or otherwise coupled together. Coupling may be for any length of time, e.g., permanent or semipermanent or only for an instant. "Electrical coupling" and the like should be broadly understood and include electrical coupling of all types. The absence of the word "removably," "removable," and the like near the word "coupled," and the like does not mean that the coupling, etc. in question is or is not removable.

As defined herein, two or more elements are "integral" if they are comprised of the same piece of material. As defined herein, two or more elements are "non-integral" if each is comprised of a different piece of material.

As defined herein, "real-time" can, in some embodiments, be defined with respect to operations carried out as soon as practically possible upon occurrence of a triggering event. A triggering event can include receipt of data necessary to execute a task or to otherwise process information. Because of delays inherent in transmission and/or in computing speeds, the term "real time" encompasses operations that occur in "near" real time or somewhat delayed from a triggering event. In a number of embodiments, "real time" can mean real time less a time delay for processing (e.g., determining) and/or transmitting data. The particular time delay can vary depending on the type and/or amount of the data, the processing speeds of the hardware, the transmission capability of the communication hardware, the transmission distance, etc. However, in many embodiments, the time delay can be less than approximately one second, two seconds, five seconds, or ten seconds.

As defined herein, "approximately" can, in some embodiments, mean within plus or minus ten percent of the stated value. In other embodiments, "approximately" can mean within plus or minus five percent of the stated value. In further embodiments, "approximately" can mean within plus or minus three percent of the stated value. In yet other embodiments, "approximately" can mean within plus or minus one percent of the stated value.

Although systems and methods for context dependent invocation of predictive software application and data storage have been described with reference to specific embodiments, it will be understood by those skilled in the art that various changes may be made without departing from the spirit or scope of the disclosure. Accordingly, the disclosure of embodiments is intended to be illustrative of the scope of the disclosure and is not intended to be limiting. It is intended that the scope of the disclosure shall be limited only to the extent required by the appended claims. For example, to one of ordinary skill in the art, it will be readily apparent that any element of FIGS. 1-2 may be modified, and that the foregoing discussion of certain of these embodiments does not necessarily represent a complete description of all possible embodiments. For example, one or more of the procedures, processes, or activities of FIG. 1 may include different procedures, processes, and/or activities and be performed by many different modules, in many different orders.

All elements claimed in any particular claim are essential to the embodiment claimed in that particular claim. Consequently, replacement of one or more claimed elements constitutes reconstruction and not repair. Additionally, benefits, other advantages, and solutions to problems have been described with regard to specific embodiments. The benefits, advantages, solutions to problems, and any element or elements that may cause any benefit, advantage, or solution to occur or become more pronounced, however, are not to be construed as critical, required, or essential features or elements of any or all of the claims, unless such benefits, advantages, solutions, or elements are stated in such claim.

Moreover, embodiments and limitations disclosed herein are not dedicated to the public under the doctrine of dedication if the embodiments and/or limitations: (1) are not expressly claimed in the claims; and (2) are or are potentially equivalents of express elements and/or limitations in the claims under the doctrine of equivalents.

## Claims

1. A method for providing Internet Protocol (IP) phones with wireless broadband capabilities and a handoff from public cellular networks to a private business system, the method comprising:
providing a plurality of IP phones within an environment with one or more modular Long-Term Evolution (LTE) upgrade units;
configuring the one or more modular LTE upgrade units to connect to a private IP network associated with the environment;
continuously monitoring signal strength and connectivity status of a public LTE network and the private IP network;
detecting a device with an active call in the environment;
when the private IP network provides a stronger and more stable connection, initiating a handoff of the active call from the public LTE network to the private IP network;
transferring data associated with the active call to an available LTE-equipped IP phone or other endpoint within the private IP network, wherein the available LTE-equipped IP phone or other endpoint is selected based on connection quality, availability, or proximity;
integrating business-specific features into the active call post-handoff;
monitoring a stability of the private IP network and a location of the device relative to a range of the private IP network; and
when the private IP network becomes unstable or when the device moves out of the range, reverting service of the active call back to the public LTE network to maintain continuous connectivity.

2. The method of claim 1, wherein the one or more modular LTE upgrade units are installed through add-on devices using a Programmable Key Module (PKM) interface or including a phone stand using connector interfaces or phone handset.

3. The method of claim 2, wherein to communicate with the one or more modular LTE upgrade units through wire or wireless, the add-on devices incorporate CPU, power supply circuit, LTE, integrated antennas, interfaces, and hardware components.

4. The method of claim 3, wherein the one or more modular LTE upgrade units displace the PKM interface or are an alternative phone stand.

5. The method of any preceding claim, further comprising:
establishing a mesh network among the plurality of IP phones, wherein establishing the mesh network causes the plurality of IP phones to function collectively as a unified carrier system that operates independently of external networks.

6. The method of any preceding claim, further comprising:
when the private IP network does not provide a stronger and more stable connection, continuing the active call over the public LTE network without transition.

7. The method of any preceding claim, further comprising:
implementing a continuous monitoring system to evaluate the signal strength and connectivity quality of the LTE network.

8. The method of claim 7, further comprising:
when poor signal strength or connectivity issues are detected on the LTE network, automatically switching the active call and data sessions associated with the active call to the private IP network which acts as a backup.

9. The method of claim 7, further comprising:
when stable signal strength or connectivity is detected on the LTE network, continuing to use the LTE network for the active call.

10. The method of any preceding claim, further comprising:
enabling users on the private IP network to access functionalities directly from LTE-equipped desk phones or an LTE phone with an adapted module within the environment, the functionalities including room booking systems and enterprise intranet chat.

11. The method of any preceding claim, further comprising:
managing calls within the private IP network using traditional IP telephony features.

12. The method of any preceding claim, further comprising:
securing and logging communications according to business standards using capabilities, the capabilities including call transferring, conferencing, and direct station calls.

13. The method of any preceding claim, wherein the plurality of IP phones gain LTE endpoint features.

14. A dual-functional modular system for providing Internet Protocol (IP) phones with wireless broadband capabilities and a handoff from public cellular networks to a private system, comprising:
one or more modular Long-Term Evolution (LTE) upgrade units;
a plurality of IP phones within a business environment;
a tangible, non-transitory memory configured to communicate with the one or more modular LTE upgrade units and the plurality of IP phones, the tangible, non-transitory memory having instructions stored thereon that, in response to execution by the processor, cause the processor to perform operations comprising:
connect the one or more modular LTE upgrade units to a private IP network associated with the business environment;
continuously monitor signal strength and connectivity status of a public LTE network and the private IP network;
detect a device with an active call in the business environment;
when the private IP network provides a stronger and more stable connection, initiate a handoff of the active call from the public LTE network to the private IP network;
transfer data associated with the active call to an available LTE-equipped IP phone or other endpoint within the private IP network, wherein the available LTE-equipped IP phone or other endpoint is selected based on connection quality, availability, or proximity;
integrate business-specific features into the active call post-handoff;
monitor a stability of the private IP network and a location of the device relative to a range of the private IP network; and
when the private IP network becomes unstable or when the device moves out of the range, revert service of the active call back to the public LTE network to maintain continuous connectivity.

15. A method for providing Internet Protocol (IP) phones with wireless broadband capabilities and a handoff from public cellular networks to a private system, the method comprising:
providing a plurality of IP phones within an environment with one or more modular Long-Term Evolution (LTE) upgrade units;
configuring the one or more modular LTE upgrade units to connect to a private IP network associated with the environment;
continuously monitoring signal strength and connectivity status of a public LTE network and the private IP network;
detecting a device with an active call in the environment;
when the private IP network provides a stronger and more stable connection, initiating a handoff from the public LTE network to the private IP network;
transferring the active call to an available LTE-equipped IP phone;
monitoring a stability of the private IP network; and
when the private IP network becomes unstable, reverting service of the active call to the public LTE network to maintain continuous connectivity.
